# EUROPÄISCHE PATENTSCHRIFT

(11) **EP 4 063 696 B1**
(45) Veröffentlichungstag und Bekanntmachung des Hinweises auf die Patenterteilung: **29.05.2024**
(21) Anmeldenummer: 22161780.6
(22) Anmeldetag: 14.03.2022
(51) Int. Cl.: F16H 57/04

(54) **ANTRIEBSANORDNUNG FÜR EIN KRAFTFAHRZEUG**
DRIVE ASSEMBLY FOR A MOTOR VEHICLE
DISPOSITIF D'ENTRAINEMENT POUR UN VÉHICULE AUTOMOBILE

(30) Priorität: 23.03.2021 DE 102021202838
(43) Veröffentlichungstag der Anmeldung: 28.09.2022
(73) Patentinhaber: VOLKSWAGEN AG, 38440 Wolfsburg (DE)
(72) Erfinder: Gorges, Sebastian, 59964 Medebach-Dreislar (DE); Hensel, Roman, 34582 Borken (DE); Kolze, Fabian, 39179 Barleben (DE); Runge, Sascha, 12683 Berlin (DE)

(56) Entgegenhaltungen:
- DE-A1-102007 024 879
- DE-A1-102011 076 527
- US-A- 3 529 698
- US-A1- 2012 073 403
- US-A1- 2017 102 064
- US-B2- 7 059 443

## Beschreibung

Die Erfindung bezieht sich auf eine Antriebsanordnung für ein Kraftfahrzeug, umfassend
- ein Gehäuse mit einem Motorraum und einem an den Motorraum angrenzenden, über eine innere Stirnwand von diesem abgegrenzten Getrieberaum, jeweils axial begrenzt durch besagte innere Stirnwand und eine zugeordnete äußere Stirnwand,
- eine in dem Motorraum angeordnete elektrische Maschine mit einem gehäusefesten Stator und einem radial innerhalb des Stators angeordneten Rotor mit einer die innere Stirnwand durchsetzenden, im Motorraum drehbar gelagerten, hohlen Rotorwelle,
- ein in dem Getrieberaum angeordnetes Getriebe mit einem auf der hier als Antriebswelle wirkenden Rotorwelle fixierten Antriebsritzel und einem mit einem Abtrieb verbindbaren oder verbundenen Ausgangsrad, sowie
- ein in dem Getrieberaum angeordneter Ölbehälter, aus welchem durch verschiedene Ölleitöffnungen Öl in die hohle Rotorwelle sowie zu Lagern und zu Verzahnungen des Getriebes leitbar ist,
wobei der untere Bereich des Getrieberaums als ein Getriebeölsumpf ausgebildet ist, in welchen ein als Ölwurfrad wirkendes Getrieberad, insbesondere das Ausgangsrad, eingetaucht ist, um bei Rotation Öl aus dem Getriebeölsumpf in eine Einlassöffnung des Ölbehälters zu werfen.

Eine derartige Antriebsanordnung ist bekannt aus der US 7 059 443 B2.

Diese Druckschrift offenbart einen elektrischen Antrieb für ein Kraftfahrzeug, der als eine kompakte Antriebsanordnung ausgebildet ist, welche einerseits das eigentliche Antriebsaggregat und andererseits ein Getriebe zur Übersetzung und Verteilung des von der elektrischen Maschine gelieferten Momentes umfasst. Beide Einheiten sind in einem gemeinsamen Gehäuse angeordnet, welches jedoch aufgrund der unterschiedlichen Anforderungen der einzelnen Einheiten in im Wesentlichen getrennte Räume, nämlich einen Motorraum und einem Getrieberaum, unterteilt ist. Beide Räume werden von einer gemeinsamen Welle durchsetzt, die im Motorraum als Rotorwelle und im Getrieberaum als Getriebeeingangswelle wirkt. Dies bedeutet, dass Motorraum und Getrieberaum in axialer Richtung benachbart zueinander angeordnet sind und sich eine gemeinsame Stirnwand, die hier als innere Stirnwand bezeichnet wird, teilen. Auf der axial jeweils anderen, gegenüberliegenden Seite ist jeder Raum von einer weiteren, hier jeweils als äußere Stirnwand bezeichneten Stirnwand begrenzt. Zwischen der (gemeinsamen) inneren Stirnwand und jeder äußeren Stirnwand erstreckt sich in axialer Richtung eine jeweils zugeordnete Mantelwand.

Eine ähnliche Antriebsanordnung ist in der DE 10 2011 076 527 A1 offenbart, wobei dort jedoch lediglich in eine Gehäusedeckelwandung integrierte Ausbuchtungen die Funktion einer temporären Ölbevorratung erfüllen.

Der Fachmann wird verstehen, dass sich Begriffe, die allgemeine Relativausrichtungen oder -positionierungen bezeichnen, wie "neben", "unter", "über" etc., sofern nichts anderes gesagt ist, stets auf die Montageendlage der Antriebsanordnung im Kraftfahrzeug beziehen. Entsprechendes gilt auch für absolute Ausrichtungs- und Positionierungsangaben, wie "horizontal" oder "vertikal". Symmetriespezifische Begriffe wie "axial", "radial" etc. sind stets im Kontext der jeweils beschriebenen Symmetrieeinheit zu verstehen.

Kompakte Antriebsanordnungen verlangen nach einem ausgeklügelten Kühl- und Schmiersystem, welches regelmäßig (zumindest auch) auf Ölbasis arbeitet. Hierzu weist die in der gattungsbildenden Druckschrift offenbarte Anordnung im unteren Bereich des Getriebeölraums einen Getriebeölsumpf auf, in welchen mehrere der Getrieberäder, insbesondere das Ausgangsrad, welches den größten Raddurchmesser im Getriebe aufweist, eintauchen. Oberhalb der Rotorwelle ist im Getrieberaum ein gesonderter Ölbehälter angeordnet, der zum Ausgangsrad hin eine freie Kante aufweist, zwischen der und der Getrieberaum-Mantelwand eine als Einlassöffnung für den Ölbehälter wirkende Lücke besteht. Bei Rotation des Ausgangsrades nimmt dessen Verzahnung Öl aus dem Getriebeölsumpf mit und schleudert dieses durch die Einlassöffnung in den Ölbehälter, der zwei wannenartige Teilräume aufweist, in denen Öl bis zu einem Überlaufniveau aufgestaut werden kann. Im Staubereich dieser wannenartigen Teilräume sind Auslässe in der Seitenwand des Ölbehälters angeordnet, die außen mit Leitungen verbunden sind, welche ins Innere der hohlen Rotorwelle führen. Weitere Auslässe in den Seitenwänden des Ölbehälters führen zu Lagerstellen des Getriebes. Bei Betrieb der Antriebsanordnung wird also Öl aus dem Getriebeölsumpf in den Ölbehälter gefördert, dort aufgestaut und nach Erreichen eines hinreichenden Stauniveaus in die Rotorwelle und zu den Lagerstellen gefördert. Die wannenartige Struktur der Teilräume im Ölbehälter sorgt dafür, dass - nach Erreichung des hinreichenden Stauniveaus - an den Auslässen stets ein gleichbleibender Öldruck herrscht, sodass Strömungsmenge und -geschwindigkeit des zur Kühlung und Schmierung der Rotorwelle und der Lager genutzten Öls gut vorhersagbar sind.

Nachteilig bei dem bekannten System ist der Zeitverzug, mit dem die Beölung der kritischen Positionen nach dem Start der Antriebsanordnung einsetzt. Insbesondere nach einer langen Ruhephase ist nämlich das Stauniveau im Ölbehälter bis unter die Auslässe abgefallen; auch die kritischen Positionen selbst - z. B. Zahneingriffspositionen, Lagerstellen, Rotorwelleninnenraum - können durch Ablauf des Öls zwischenzeitlich trockengefallen sein. Die Beölung der kritischen Positionen setzt erst ein, wenn der Ölpegel im Ölbehälter durch die Rotation des Ausgangsrades wieder hinreichend angestiegen und Öl aus dem Ölbehälter wieder zu den kritischen Positionen gefördert wird. Während dieser Startphase läuft die Antriebsanordnung im Wesentlichen ungeschmiert und ungekühlt, was zu erhöhtem Verschleiß führen kann. Auch, wenn bei sehr langsamer Rotation des Ausgangsrades Öl nur unzureichend nachgefördert wird, kann der Ölpegel im Ölbehälter so stark absinken, dass keine optimale Beölung der kritischen Positionen mehr gewährleistet ist.

Die US 3 529 698 A offenbart eine Getriebeanordnung, bei der ebenfalls Öl aus einem Ölsumpf mittels eines der Getrieberäder, welches dabei als Ölwurfrad fungiert, in die Eingangsöffnung eines Ölbehälters geworfen wird. Das Öl wird dabei mittels eines Schabblechs vom aufsteigenden Teil der Verzahnung des Ölwurfrades getrennt und mittels einer sich an das Schabblech anschließenden, konkaven Prallplatte, gegen die es dadurch geschleudert wird, in den Ölbehälter umgelenkt. Am Ölwurfrad verbleibendes Öl wir im absteigenden Bereich mittels eines weiteren Schabblechs von der Verzahnung des Ölwurfrades getrennt und über einen horizontalen Ölleitvorsprung in das Behälterinnere geleitet und dort abtropfen gelassen.

Die DE 10 2007 024 879 A1 offenbart eine ähnliche Ölförderung, bei der das Öl jedoch nur im aufsteigenden Bereich von der Verzahnung des Ölwurfrades geschabt und in den Ölbehälter umgelenkt wird.

Die US 2017/102064 A1 offenbart eine Getriebeanordnung, bei der ebenfalls Öl aus einem Ölsumpf mittels eines der Getrieberäder, welches dabei als Ölwurfrad fungiert, in die Eingangsöffnung eines Ölbehälters geworfen wird. Hier ist der gesamte aufsteigende Teil des Ölwurfrades durch die Gehäusewandung und ein zusätzliches Ölleitblech eingehaust, wodurch sich ein Förderkanal bildet. Im oberen Bereich des absteigenden Teils öffnet sich der Förderkanal in einen Ölbehälter, dessen Boden von einem Zwischenboden im Getriebegehäuse gebildet ist. Dieser Zwischenboden ist wannenartig gekrümmt und bildet somit ein

Ölrückhaltebecken. Ab einem bestimmten Ölpegel fließt weiteres Öl zwischen der freien Kante des Zwischenbodens und der Gehäusewandung zurück in den Ölsumpf, wobei es zusätzlich die Verzahnung eines weiteren Getrieberades benetzt.

Die US 2012/073403 offenbart eine bzgl. der Ölförderung ähnliche Getriebeanordnung. Auch hier ist der aufsteigende Teil des Ölwurfrades eingehaust, im oberen Bereich des absteigenden Teils wird das Öl per Zentrifugalkraft in einen seitlich oben offenen Ölbehälter geworfen. Die der Einlassöffnung gegenüberliegende Außenwand des Ölbehälters, die zugleich eine Außenwand des Getriebegehäuses darstellt, ist konkav gewölbt und dient als Prallwand für besonders weit geworfene Ölanteile, das dann an dieser Wand zum Behälterboden abläuft.

Es ist die Aufgabe der vorliegenden Erfindung, eine gattungsgemäße Antriebsanordnung derart weiterzubilden, dass eine hinreichende Beölung der kritischen Positionen schneller nach dem Start einsetzt und auch bei sehr langsamem Betrieb gewährleistet ist.

Diese Aufgabe wird in Verbindung mit den Merkmalen des Oberbegriffs von Anspruch 1 dadurch gelöst, dass in dem Ölbehälter gegenüber dessen Einlassöffnung eine konkav gekrümmte, als Prallwand für das von dem Ölwurfrad, insbesondere dem Ausgangsrad, eingeworfene Öl wirkende Zwischenwand angeordnet ist, die einen tiefer als die Einlassöffnung positionierten Durchlass aufweist, wobei unterhalb der Einlassöffnung ein höher als der Durchlass positionierter Ölleitvorsprung angeordnet ist, der ein von der Einlassöffnung her über ihn hinweg strömendes Öl-Rinnsal im Freistrahl zu dem Durchlass in der Prallwand lenkt.

Bevorzugte Ausführungsformen der Erfindung sind Gegenstand der abhängigen Patentansprüche.

Zunächst ist erfindungsgemäß vorgesehen, dass der Einlassöffnung gegenüber eine Prallwand angeordnet ist. Diese erstreckt sich im Wesentlichen bzw. vorwiegend in vertikaler Richtung, sodass das von dem Ölwurfrad, insbesondere dem Ausgangsrad, im Wesentlichen horizontal in die Einlassöffnung des Ölbehälters eingeworfene Öl gegen diese Prallwand geschleudert wird. Dies zumindest bei denjenigen Rotationsgeschwindigkeiten des Ölwurfrades, die im üblichen Normalbetrieb der Antriebsanordnung zu erwarten sind. Die Prallwand und die ihr gegenüberliegende Seitenwand des Ölbehälters bilden einen im Wesentlichen vertikalen Kanal, durch welches das Öl dann in den Behälter einströmt, das untere, freie Ende der Prallwand umströmt und sich im Ölbehälter bis zum Niveau verschiedener Auslässe in den Seitenwänden des Ölbehälters aufstaut. Die erfindungsgemäße Besonderheit der Prallwand besteht jedoch in ihrer konkaven Krümmung (gesehen vom Kanalinneren her) und dem Vorsehen eines Durchlasses im unteren Bereich dieser konkaven Krümmung. Der Durchlass bildet mithin ein schrägstehendes Loch in der Prallwand. Diesem Durchlass schräg gegenüber, d.h. im Wesentlichen in Normalenrichtung des Loches, ist an der gegenüberliegenden Seitenwand des Ölbehälters unterhalb der Einlassöffnung ein Vorsprung, beispielsweise in Form einer Nase oder einer dachartigen Ölleitstruktur, angeordnet. Dieser bildet quasi eine Verlängerung der Unterkante der Einlassöffnung und ragt etwas in den im Wesentlichen vertikalen Einlasskanal hinein. Hierdurch wird bewirkt, dass Öl, welches nicht mit hinreichender Geschwindigkeit in die Einlassöffnung eingeworfen wird, um bis zur Prallwand zu gelangen, nicht an der einlassseitigen Seitenwand des Einlasskanals abläuft, sondern als Rinnsal über den Ölleitvorsprung fließt und in den schräggestellten Durchlass der Prallöffnung tropft, um so auf die andere Seite der Prallwand und somit zu den Auslässen in den Seitenwänden des Ölbehälters zu gelangen. Mit anderen Worten sind also dem in den Ölbehälter eingeworfenen Öl durch die erfindungsgemäße Gestaltung zwei unterschiedliche Wege eröffnet, um zu den Auslässen jenseits der Prallwand zu gelangen: Mit niedriger Geschwindigkeit und geringem Volumenstrom zugeführtes Öl rinnt oder tropft über den Ölleitvorsprung in den Durchlass der Prallwand; mm Normalbetrieb mit hoher Geschwindigkeit und hohem Volumenstrom zugeführtes Öl hingegen fließt im Wesentlichen den Einlasskanal hinab und umströmt das freie Ende der Prallwand, wobei geringe Anteile ebenfalls den direkten Weg durch den Durchlass nehmen können. Diese beiden Wege, die nachfolgend als Schwachströmungsweg bzw. Starkströmungsweg bezeichnet werden sollen, können genutzt werden, um eine Priorisierung bei der Ölverteilung vorzunehmen und insbesondere sicherzustellen, dass besonders kritische Positionen auch bei langsamen Betriebsgeschwindigkeiten bzw. unmittelbar nach dem Start bereits mit Öl versorgt werden.

Insbesondere kann, wie bevorzugt vorgesehen, der Ölbehälter auf der dem Ölleitvorsprung abgewandten Seite der Prallwand von einem unterhalb des Durchlasses angeordneten, öldicht mit der Prallwand verbundenen, wannenartigen Zwischenboden durchzogen sein, mittels dessen durch den Durchlass dringendes Öl aufstaubar ist. Weist dann, wie bevorzugt vorgesehen, eine Seitenwand des Ölbehälters oberhalb - vorzugsweise unmittelbar oberhalb - des Zwischenbodens einen mit dem Inneren der hohle Rotorwelle verbundenen Rotorwellen-Auslass auf, durch den mittels des Zwischenbodens aufgestautes Öl in die hohle Rotorwelle leitbar ist, ist sichergestellt, dass bereits bei geringstem Öleintrag in den Ölbehälter Öl zur Rotorinnenkühlung in die hohle Rotorwelle geleitet wird. Diese genießt damit im Rahmen des Kühlungs- und Schmierungskonzeptes eine besonders hohe Priorität.

Dem gleichen Grundgedanken folgend kann im Hinblick auf ein besonders kühlungs- und schmierungskritisches Lager, beispielsweise ein Rotorwellenlager, vorgesehen sein, dass eine Seitenwand des Ölbehälters oberhalb des Zwischenbodens - vorzugsweise unmittelbar oberhalb des Zwischenbodens - einen mit einem Lager des Getriebes und/oder der elektrischen Maschine verbundenen Lager-Auslass aufweist, durch den mittels des Zwischenbodens aufgestautes Öl zu dem Lager leitbar ist.

Der Rotorwellen-Auslass und der Lager-Auslass können auf gleichem Höhenniveau in gegenüberliegenden Seitenwänden des Ölbehälters angeordnet sein. Die Wahl der jeweiligen Seitenwand ergibt sich in der Regel aus der Geometrie des Gesamtaufbaus und dem grundlegenden Wunsch, die Leitstrecken für das Öl zwischen dem Ölbehälter und dem Einsatzort möglichst kurz zu halten. Eine grundlegende Priorisierung der einzelnen Auslässe bzw. der mit diesen verbundenen kritischen Positionen kann durch die relative Höhenlage der Auslässe bestimmt werden. Bei Anordnung auf gleichem Höhenniveau setzt die effektive Beölung im Wesentlichen zeitgleich ein. Im Hinblick auf die jeweils transportierte Ölmenge kann eine Differenzierung durch Wahl der Auslassgröße erreicht werden. So ist bevorzugt vorgesehen, dass der Rotorwellen-Auslass größer ist als der Lager-Auslass. Dies folgt dem Gedanken, dass zur Kühlung einer kritischen Position, insbesondere der hohlen Rotorwelle, erheblich größere Strömungsvolumina erforderlich sind als für eine bloße Schmierung, wie sie insbesondere bei der Beölung von Lagern im Vordergrund steht. Selbstverständlich können oberhalb des Zwischenbodens auch mehrere Lager-Auslässe auf gleichem oder unterschiedlichen Höhenniveau mit gleichen oder unterschiedlichen Auslassgrößen und in der gleichen oder in unterschiedlichen Seitenwänden vorgesehen sein.

All diese beschriebenen Ausführungsformen betreffen den Schwachströmungsweg, d.h. denjenigen Weg, den das mit niedriger Geschwindigkeit in die Einlassöffnung des Ölbehälters eingeworfene Öl nimmt. Bei Normalbetrieb nimmt das Öl hingegen, wie oben bereits erläutert, den hier als Starkströmungsweg bezeichneten Weg, auf dem es das freie, untere Ende der Prallwand, die zu diesem Zweck nicht bis zur unteren Seitenwand des Ölbehälters durchgezogen ist, umströmt. Auch das der Prallwand abgewandte Ende des Zwischenbodens ist als ein freies Ende ausgebildet, d.h. von Öl umströmbar. Auf dem Starkströmungsweg kann also Öl in den Bodenbereich des Ölbehälters geleitet werden und sich dort aufstauen, um bei Erreichen des Höhenniveaus des Zwischenbodens quasi von "hinten" in die von dem Zwischenboden gebildete Wanne einzuströmen und die vorgenannten Auslässe mit Öl zu versorgen. Der Fachmann wird verstehen, dass die Beölung der kritischen Positionen auf diesem Weg zeitverzögert zum Start der Antriebsanordnung und in hinreichendem Maße auch nur bei Normalbetriebs-Geschwindigkeiten der Getrieberotation erfolgt, weil zunächst der entsprechende Ölpegel im Ölbehälter aufgebaut werden muss. Wegen des während dieser Zeit wirksamen Schwachströmungsweges jedoch ist die hinreichende Beölung der kritischen Positionen jederzeit gewährleistet.

Günstigerweise ist im untersten Bereich des Ölbehälters eine abflusslose Tasche ausgebildet, in der Öl bis zum Niveau eines in einer Seitenwand des Ölbehälters angeordneten, mit dem Getriebeölsumpf verbundenen Getriebeölsumpf-Auslasses aufstaubar ist. Mit anderen Worten ist also ein behälterinterner Sumpf vorgesehen, in dem unabhängig vom Betriebszustand stets eine geringe Ölmenge verbleibt und der nicht aktiv durchströmt wird. In diesem "Totwasserbereich" können sich Schmutzpartikel, wie beispielsweise metallischer Abrieb, dauerhaft absetzen und werden so dem Ölkreislauf dauerhaft entzogen. Oberhalb dieses behälterinternen Sumpfes ist bevorzugt ein Getriebeölsumpf-Auslass vorgesehen, über den Öl im Behälter, welches nicht zur Beölung kritischer Positionen abgeleitet wird, in den Getriebeölsumpf zurückgeführt werden kann. Dieser Getriebeölsumpf-Auslass dient insbesondere auch der Entleerung des Ölbehälters (mit Ausnahme der Tasche) bei Stillstand der Antriebsanordnung.

Das eingangs geschilderte Problem des Trockenfallens kritischer Positionen während eines langen Stillstandes der Antriebsanordnung besteht insbesondere auch im Bereich der Getriebeverzahnungen. Gerade beim Antriebsritzel hier werden hohe Drehmomente und sehr hohe Drehzahlen übertragen, sodass bei trockenem Betrieb hoher Verschleiß zu befürchten ist. Bei einer Weiterbildung der Erfindung ist daher vorgesehen, dass der Getriebeölsumpf-Auslass in eine Wanne außerhalb des Ölbehälters mündet, in welche der untere Bereich des Antriebsritzels von oben hineinragt. Beim Abstellen der Antriebsanordnung, wenn also kein Öl mehr in den Ölbehälter nachgefördert wird, läuft dieser über den Getriebeölsumpf-Auslass (abgesehen von der Tasche) leer, wobei sich die Antriebsritzel-Wanne, in welche der Getriebeölsumpf-Auslass mündet, voll- und ggf. in den Getriebeölsumpf überläuft. Allerdings bleibt die Antriebsritzel-Wanne gefüllt, sodass der untere Bereich des Antriebsritzels, welcher in diese Wanne hineinragt, auch bei langen Standphasen beölt bleibt. Beim Neustart der Antriebsanordnung ist also die Verzahnung des Antriebsritzels und dadurch auch die mit ihr kämmende Verzahnung des nachfolgenden Getrieberades unverzüglich, jedenfalls nach deutlich weniger als einer Ritzelumdrehung, vollständig beölt, sodass von Anfang an eine optimale Schmierung gewährleistet ist.

Um einen übermäßigen Ölstau im Ölbehälter auf jeden Fall zu vermeiden, kann bei einer bevorzugten Weiterbildung der Erfindung vorgesehen sein, dass in einer Seitenwand des Ölbehälters ein höher als der Durchlass der Prallwand positionierter, mit dem Motorraum verbundener Motorraum-Auslass angeordnet ist. Dieser Überlauf zum Motorraum dient typischerweise lediglich als Not-Auslass, kann jedoch bei bestimmten Ölverteilungskonzepten auch gezielt im Normalbetrieb genutzt werden. Zeitpunkt und Strömungsvolumen des hierüber in den Getrieberaum abgegebenen Öls kann durch entsprechende Höhenpositionierung und Größendimensionierung des Motorraum-Auslasses gewählt werden.

Weitere Einzelheiten und Vorteile der Erfindung ergeben sich aus der nachfolgenden, speziellen Beschreibung und den Zeichnungen.

Es zeigen:
- Figur 1:: einen stark schematisierten Längsschnitt durch eine bevorzugte Ausführungsform einer erfindungsgemäßen Antriebsanordnung,
- Figur 2:: eine Schnittdarstellung gemäß Schnittlinie II-II in Figur 1,
- Figur 3:: eine Schnittdarstellung gemäß Schnittlinie III-III in Figur 1,
- Figur 4:: eine Schnittdarstellung analog Figur 3 durch eine alternative Ausführungsform,
- Figur 5:: eine zu Figur 1 analoge Schnittdarstellung durch eine weitere alternative Ausführungsform,
- Figur 6:: eine Schnittdarstellung gemäß Schnittlinie VI-VI in Figur 5,
- Figur 7:: eine teilweise geschnittene Darstellung einer weiteren alternativen Ausführungsform,
- Figur 8:: eine Schnittdarstellung gemäß Schnittlinie VIII-VIII in Figur 7,
- Figur 9:: eine schematische Darstellung des Ölbehälters zur Veranschaulichung seiner Position im Getriebe,
- Figur 10:: eine Schnittdarstellung des Ölbehälters von Figur 9 mit eingezeichnetem Starkström ungsweg,
- Figur 11:: eine Schnittdarstellung des Ölbehälters von Figur 9 mit eingezeichnetem Schwachströmungsweg sowie
- Figur 12:: eine umgekehrte Schnittdarstellung des Ölbehälters von Figur 9.

Gleiche Bezugszeichen in den Figuren weisen auf gleiche oder analoge Elemente hin.

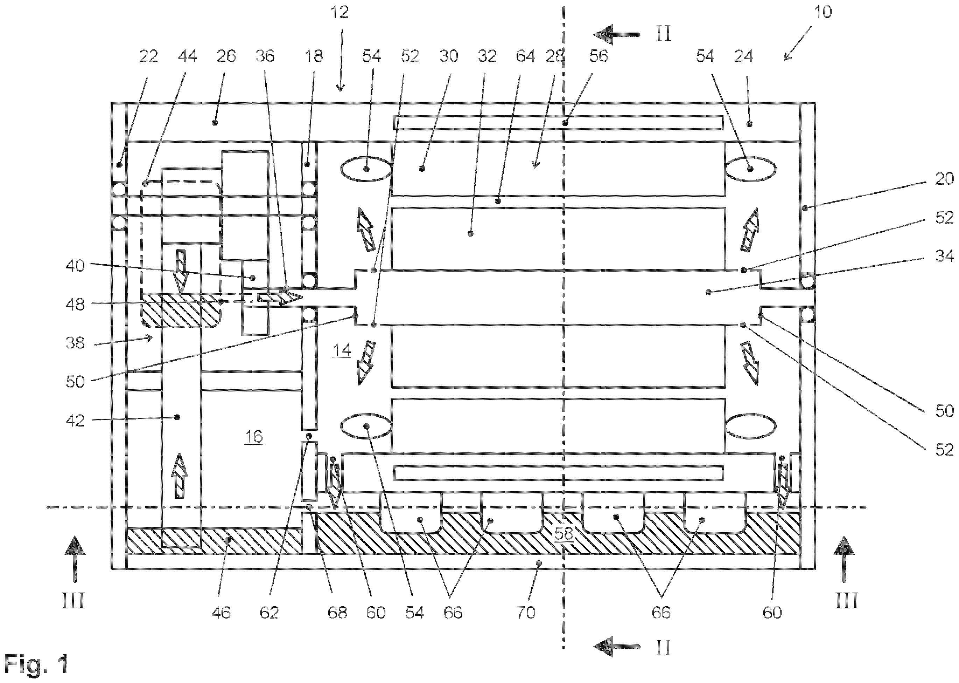

Figur 1 zeigt in stark schematisierter Darstellung einen Längsschnitt durch eine Ausführungsform einer erfindungsgemäßen Antriebsanordnung 10. Die Antriebsanordnung 10 umfasst ein Gehäuse 12, welches in einen Motorraum 14 und einen Getrieberaum 16 unterteilt ist. Der Motorraum 14 und der Getrieberaum 16 sind einander axial benachbart angeordnet. Sie sind durch eine hier als innere Stirnwand 18 bezeichnete Zwischenwand voneinander getrennt. Der inneren Stirnwand 18 in axialer Richtung gegenüberliegend ist der Motorraum 14 durch eine äußere (Motorraum-)Stirnwand 20 und der Getrieberaum 16 durch eine äußere (Getrieberaum-)Stirnwand 22 begrenzt. In radialer Richtung ist der Motorraum 14 durch eine (Motorraum-)Mantelwand 24 und der Getrieberaum 16 durch eine (Getrieberaum-)Mantelwand 26 begrenzt.

Im Motorraum 14 ist eine elektrische Maschine 28 mit einem gehäusefesten Stator 30 und einem innerhalb des Stators 30 rotierbaren Rotor 32 angeordnet. Der Rotor 32 weist eine Rotorwelle 34 auf, die einerseits in der inneren Stirnwand 18 und andererseits in der äußeren Motorraum-Stirnwand 20 gelagert ist. Die Rotorwelle 34 ist - zumindest in ihrem zentralen Bereich - hohl ausgebildet. Die Rotorwelle 34 durchsetzt dabei die innere Stirnwand 18, um als Antriebswelle 36 in den Getrieberaum 16 zu ragen. Alternativ ist es auch möglich, dass die Antriebswelle 36 eine gesonderte, koaxial mit der Rotorwelle 34 verbundene Welle ist.

Im Getrieberaum 16 ist ein Getriebe 38, insbesondere ein Übersetzungsgetriebe angeordnet. Als Eingangsrad des Getriebes 38 wirkt ein Antriebsritzel 40, welches drehfest auf der Antriebswelle 36 fixiert ist. Der Begriff des Ritzels ist weit zu verstehen und umfasst sowohl ein auf ein Welle aufgestecktes Rad als auch eine einstückig mit der Welle ausgebildete Verzahnung. Dieses steht über mehrere Verzahnungsstufen mit einem Ausgangsrad 42 in drehmomentübertragender Verbindung. Das Ausgangsrad 42 ist in nicht näher dargestellter Weise mit einem Abtrieb, insbesondere einem Differenzialgetriebe gekoppelt.

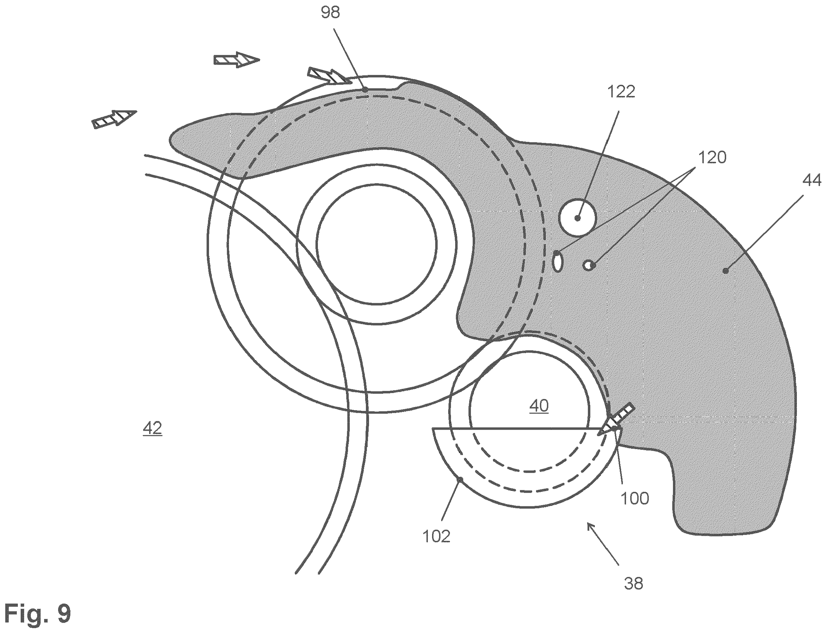

Weiter ist im Getrieberaum 16 ein Ölbehälter 44 angeordnet, auf dessen spezielle Gestaltung weiter unten im Kontext der Figuren 9 bis 14 noch näher eingegangen werden soll.

Im unteren Bereich des Getrieberaums 16 befindet sich ein Getriebeölsumpf 46, in welchen der untere Bereich des Ausgangsrades 42 von oben hineinragt. Bei Rotation nimmt seine Verzahnung Öl aus dem Getriebeölsumpf 46 auf und wirft es in den Ölbehälter 44. Diesen verlässt das Öl wenigstens teilweise über einen Rotorwellen-Auslass 48 und strömt über eine entsprechende Ölleitung in die hohle Rotorwelle 34.

Die hohle Rotorwelle 34 ist beidseitig mit einer Stufe 50 versehen, die die Ausbildung eines Ölsumpfes innerhalb der hohlen Rotorwelle 34 und damit eine Verteilung des Öls über deren axiale Länge grundsätzlich erlaubt. Allerdings kann das Öl die hohle Rotorwelle 34 über Radialöffnungen 52 verlassen. Bei Rotation der Rotorwelle 34 erfolgt dies zentrifugalkraftgetrieben in Form eines Schleuderns des Öls, welches auf diese Weise bei korrekter Positionierung der Radialöffnungen 52 zu den Wickelköpfen 54 des Stators 30 gelangt.

Der beschriebene und nachfolgend noch näher zu beschreibende Weg, den das Öl dabei nimmt, ist in den Figuren als schraffierte Ölförderpfeile angedeutet.

Bei der dargestellten Ausführungsform ist in die Mantelwand 24 des Motorraums 14 ein Kühlwassermantel 56 integriert. Bei der dargestellten Ausführungsform ist er in Form einer Anordnung von im Inneren der Motorraum-Mantelwand 24 umlaufenden Flachrohren ausgebildet. Die Anschlüsse des Kühlwassermantels 56 an ein komplexeres Wasserleitsystem sind als nicht erfindungsrelevant in den Figuren nicht näher dargestellt.

Unterhalb des Motorraums 14 befindet sich, getrennt durch den unteren Teil der Motorraum-Mantelwand 24, ein Labyrinthraum 58, der über Motorraum-Abläufe 60, mit dem Motorraum 14 verbunden ist. Insbesondere kann das auf dem oben geschilderten Weg in den Motorraum 14 gelangte Öl über die Motorraumabläufe 60 in den Labyrinthraum 58 abfließen, ohne dass die Gefahr der Ausbildung eines übermäßig hohen Motorölsumpfes bestünde. Aus Sicherheitsgründen kann, wie in der dargestellten Ausführungsform, vorgesehen sein, dass der Motorraum 14 zusätzlich über einen Motorraum-Überlauf 62 mit dem Getrieberaum 16, insbesondere dem Getriebeölsumpf 46 verbunden ist. Auf diese Weise kann zuverlässig eine Verölung des Luftspaltes 64 zwischen dem Stator 30 und dem Rotor 32 der elektrischen Maschine 28 verhindert werden.

Der Deckel des Labyrinthraums 58, d.h. die Außenseite des unteren Bereichs der Motorraum-Mantelwand 24, ist mit Kühlrippen 66 versehen, die hinreichend tief in den Labyrinthraum 58 hineinragen, um dort von aufgestautem Öl umspült zu werden. Bei einer alternativen Ausführungsform ist die thermische Kopplung zwischen dem Öl im Labyrinthraum 58 und dem Kühlwassermantel 56 nicht nur über die Kühlrippen 66 gegeben, sondern die Motorraum-Mantelwand 24 ragt tiefer in den Labyrinthraum 58 hinein und wird direkt von dem Öl benetzt. Die maximale Höhe des Ölpegels im Labyrinthraum 58 bestimmt sich durch die Höhe eines Labyrinthraum-Überlaufs 68, über welchen der Labyrinthraum 58 mit dem Getrieberaum 16, insbesondere dem Getriebeölsumpf 46 verbunden ist. Über die Kühlrippen 66 kann auf diese Weise ein Wärmeaustausch zwischen dem Kühlwassermantel 56 und dem im Labyrinthraum 58 befindlichen Öl erfolgen, wobei das Öl eine weitere Kühlung dadurch erhält, dass der Boden 70 des Labyrinthraums 58 eine Außenwandung des Gehäuses 12 darstellt, die ihrerseits von Umgebungsluft umströmt wird. Auf diese Weise wir eine besonders effiziente Kühlung des Öls und des Wassers erreicht.

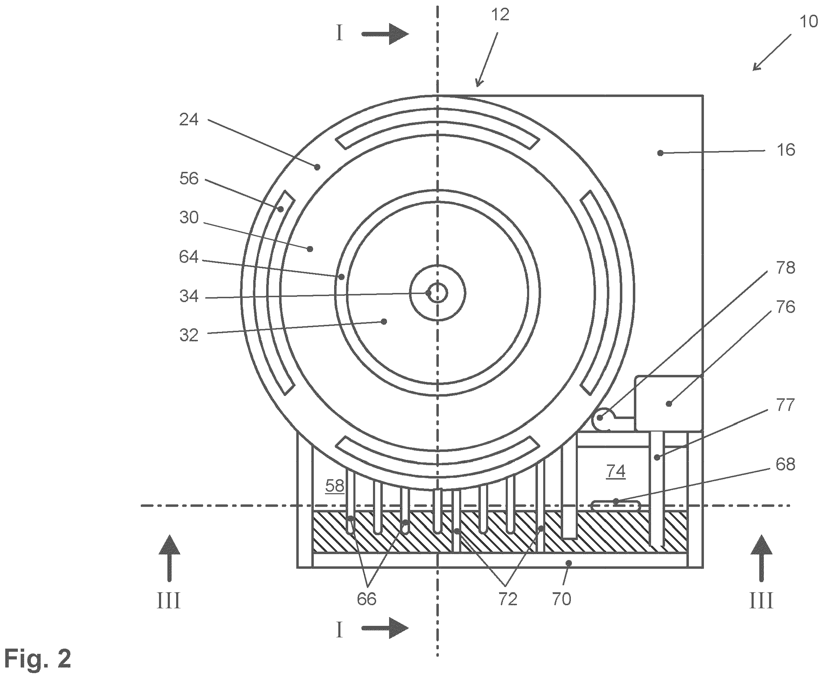

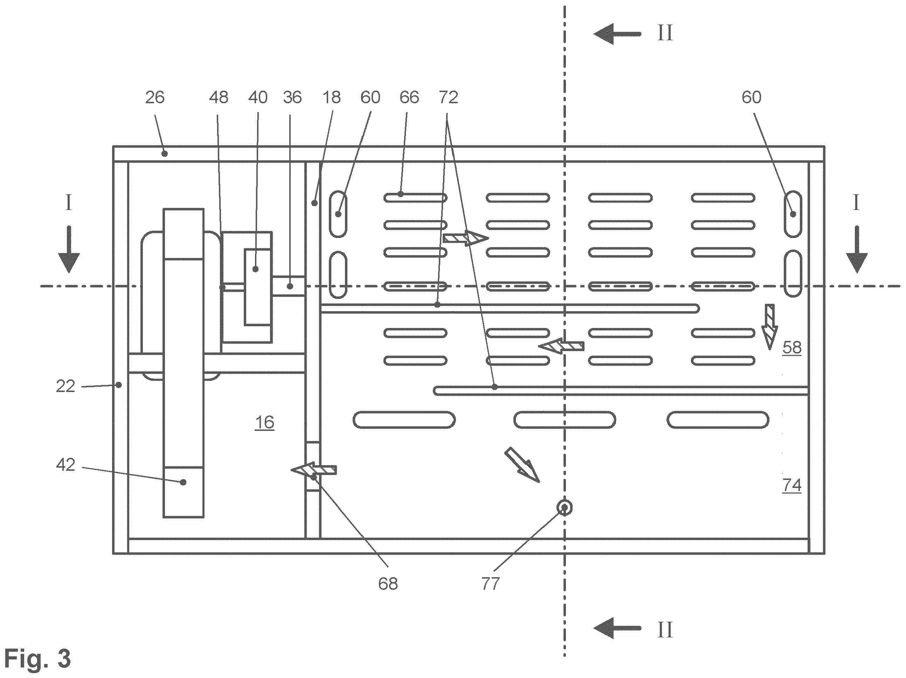

Figur 2 zeigt einen Schnitt entlang der Schnittlinie II-II in Figur 1. Figur 3 zeigt einen Schnitt entlang der Schnittlinie III-III in Figur 1. Diese beiden Darstellungen verdeutlichen, dass der Labyrinthraum 58 mehrere, seine gesamte Höhe durchsetzende Ölleitelemente 72 aufweist, welche das durch die Motorraumabläufe 60 einströmende Öl zu einer mäandrierenden Bewegung zwingen. Hierdurch wir der thermische Kontakt mit den Kühlrippen 66 intensiviert und damit der thermische Austausch verbessert.

Weiter ist in den Figuren 2 und 3 zu erkennen, dass der Labyrinthraum 58 in einen Saugraum 74 einer Ölpumpe 76, deren Saugrüssel 77 in den Saugraum 76 ragt, übergeht. Von hier aus kann Öl bei aktivem Pumpbetrieb an verschiedene schmier- und kühlbedürftige Positionen der Antriebsanordnung 10 gepumpt werden. In Figur 2 ist ein entsprechender, mit der Ölpumpe 76 verbundener Ölverteilerkanal 78 erkennbar, auf den weiter unten noch näher eingegangen werden soll.

Im Übrigen kann überschüssiges Öl aus dem Labyrinthraum 58 bzw. dem Saugraum 74 über den Labyrinthraum-Überlauf 68 in den Getrieberaum 16 und insbesondere den dortigen Getriebeölsumpf 46 gelangen.

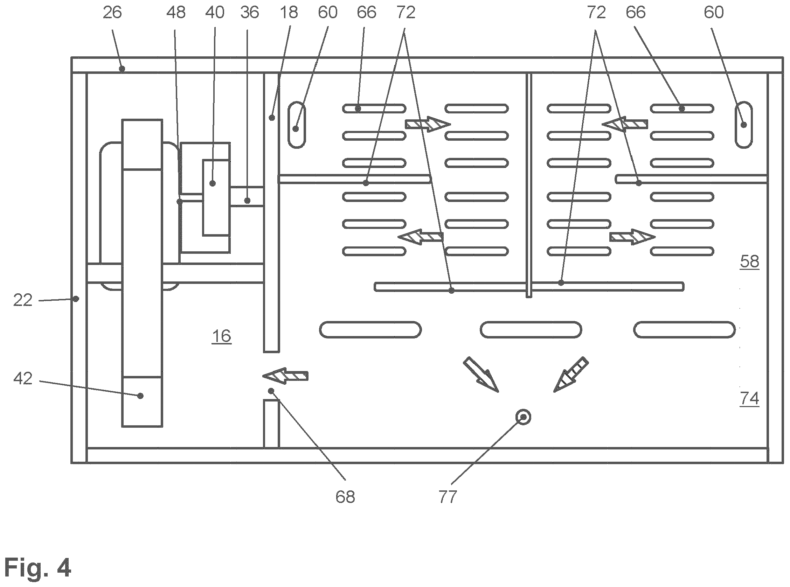

Bei der Ausführungsform von Figur 3 umfasst der Labyrinthraum 58 im Wesentlichen eine einzige Labyrinthraumkammer, in welche beide Motorraum-Abläufe 60 münden. Dies bedeutet, dass Öl, welches aus dem in Figur 3 linken Motorraum-Ablauf 60 in den Labyrinthraum 58 gelangt, am in Figur 3 rechten Motorraum-Ablauf 60 vorbeiströmt und sich dort mit dem durch diesen einströmenden Öl mischt. Hinsichtlich der Dimensionierung muss Sorge getragen werden, dass es bei großen Volumenströmen an dieser Stelle auch in besonders ungünstigen Situationen nicht zu einem Ölstau kommt. Um dies vollständig auszuschließen, ist bei einer Ausführungsform, wie beispielweise in Figur 4 gezeigt, vorgesehen, dass der Labyrinthraum in zwei unterschiedliche Labyrinthraumkammern unterteilt ist, in die je einer der Motorraum-Abläufe 60 mündet. Im Übrigen kann vollumfänglich auf das zuvor Gesagte verwiesen werden.

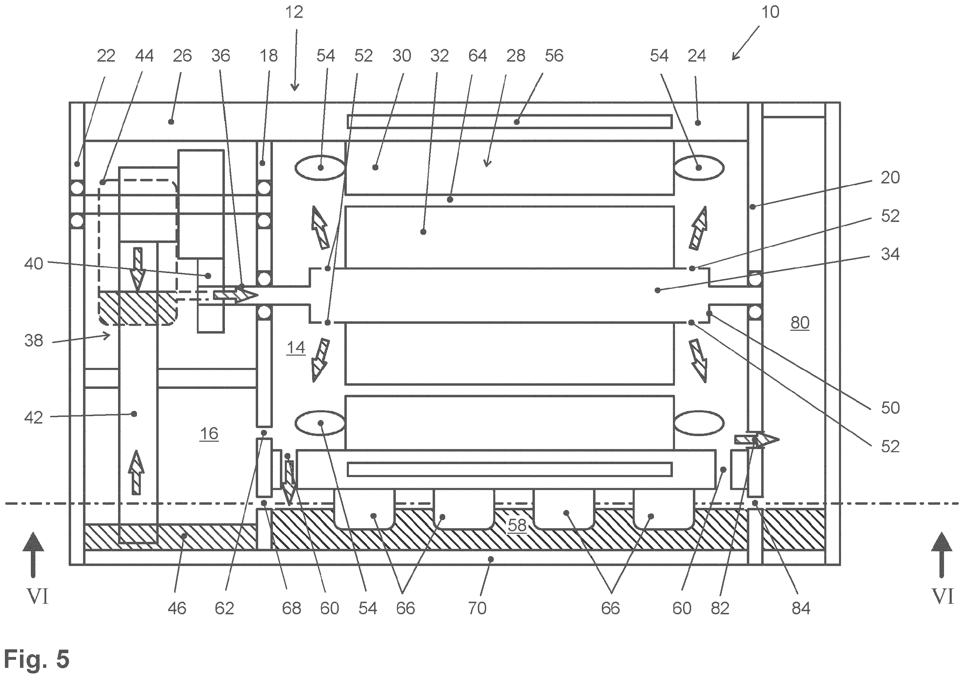

Figur 5 zeigt eine analog Figur 1 aufgebaute Darstellung einer alternativen Ausführungsform der Antriebsanordnung 10. Bei dieser Ausführungsform schließt sich axial benachbart zur äußeren Stirnseite 20 des Motorraums 14, d.h. rechts in Figur 5, ein Deckelraum 80 an, dessen Aufgabe es primär ist, durch die äußere Stirnwand 20 dringendes Öl aufzufangen. Insbesondere wird es nur schwer möglich sein, eine (in den Figuren nicht im Detail dargestellte) Beölung des Rotorwellenlagers in der äußeren Motorraum-Stirnwand 20 sicherzustellen, ohne dass Öl durch das Lager nach außerhalb des Motorraums 14 tritt. Dieses Öl kann im Deckelraum 80 aufgefangen und in der nachfolgend näher erläuterten Weise wieder in den zuvor beschriebenen Ölkreislauf rückgeführt werden. Zudem bietet das Vorhandensein des Deckelraums 80 die Möglichkeit einer gezielten weiteren Nutzung.

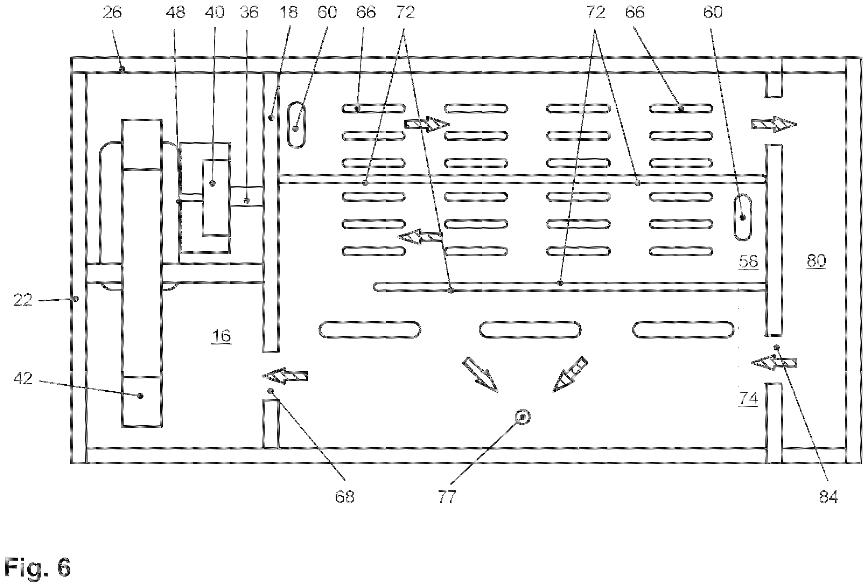

So ist bei der Ausführungsform von Figur 5 vorgesehen, dass die äußere Motorraum-Stirnwand 20 analog dem Motorraum-Überlauf 62 in der inneren Stirnwand 18 ein weiterer Motorraum-Überlauf 82 befindet, über den Öl aus dem Motorraum 14 in den Deckelraum 80 gelangen kann. Bei der gezeigten Ausführungsform ist der Deckelraum 80 über einen Labyrinthraum-Überlauf 84 mit dem Öl-Reservoir, insbesondere einem dem Labyrinthraum 58 nachgelagerten Vorraum, z.B. dem Saugraum 74, verbunden. Wie in Figur 6 gezeigt, kann dabei, ähnlich der in Figur 4 gezeigten Ausführungsform, der Labyrinthraum 58 in zwei Kammern unterteilt sein. Das durch den getrieberaumseitigen Motorraum-Ablauf 60 in den Labyrinthraum 58 fließende Öl durchströmt bei dieser Ausführungsform nur eine, nämlich die in Figur 6 obere Labyrinthraum-Kammer und umläuft dann durch den Deckelraum 80 die zweite, in Figur 6 untere Labyrinthraum-Kammer. Das durch den deckelraumseitigen Motorraum-Ablauf 60 in den Labyrinthraum 58 fließende Öl hingegen durchströmt nur die andere, nämlich die in Figur 6 untere Labyrinthraum-Kammer. Beide Ölströme vereinigen sich erst in einem dem Labyrinthraum nachgelagerten Raum, z.B. dem Saugraum 74. Ein Ölstau im Labyrinthraum wird dadurch zuverlässig vermieden. Diese Form der Ölumleitung ist auch bei Varianten ohne Deckelraum 80 denkbar. Hier könnten der Ablauf aus der (oberen) Labyrinthraum-Kammer und der Zulauf zum Saugraum über eine entsprechende Leitung verbunden sein. Ebenso ist es denkbar, dass der weitere Motorraum-Überlauf 82 den deckelraumseitigen Motorraum-Ablauf 60 ersetzt.

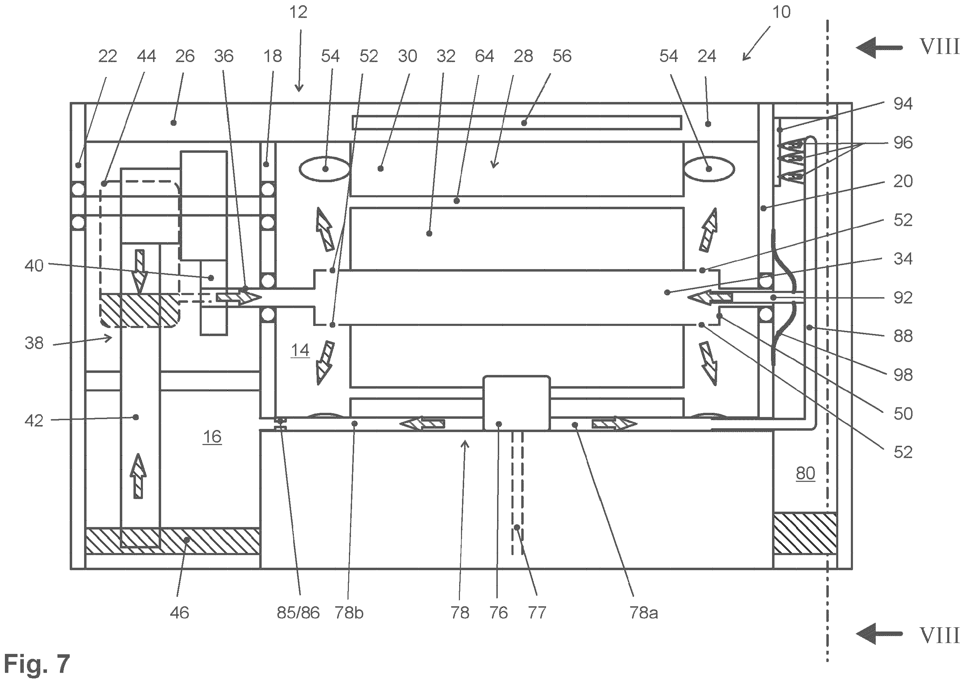

Figur 7 zeigt eine Ausführungsform, bei der der Deckelraum 80 eine alternative oder zusätzliche Nutzung erfährt. Dieser Ausführungsform-Typus setzt zwingend eine Ölpumpe 76 voraus, die Öl aus dem Ölreservoir, insbesondere aus dem Saugraum 74, Öl absaugt und in einen Ölverteilerkanal 78 einspeist. Bei der in Figur 7 dargestellten Ausführungsform verläuft der Ölverteilerkanal 78, wie in Figur 2 erkennbar, im Zwickel zwischen der Motorraum-Mantelwand 24 und dem Deckel des Saugraums 74. Er ist bei der dargestellten Ausführungsform insbesondere in zwei gegenläufige Zweige 78a, 78b unterteilt. Der hier als zweiter Zweig 78b bezeichnete, in Figur 7 linke Zweig des Ölverteilerkanals 78 mündet in den Getrieberaum 16, wobei er eine Verengungsblende 85 passiert, um einen zu starken Abstrom in den Getrieberaum 16 zu verhindern. Der überwiegende Anteil des gepumpten Öls wird daher, wie nachfolgend näher beschreiben, über den ersten Zweig 78a des Ölverteilerkanals abgeführt. Die Verengungsblende 85 im zweiten Zweig 78b des Ölverteilerkanals 78 ist bevorzugt mit einem Magneten 86, insbesondere einem Ringmagneten stromaufwärts benachbart zu ihr ausgestattet, um metallischen Abrieb aus dem Ölkreislauf zu entfernen.

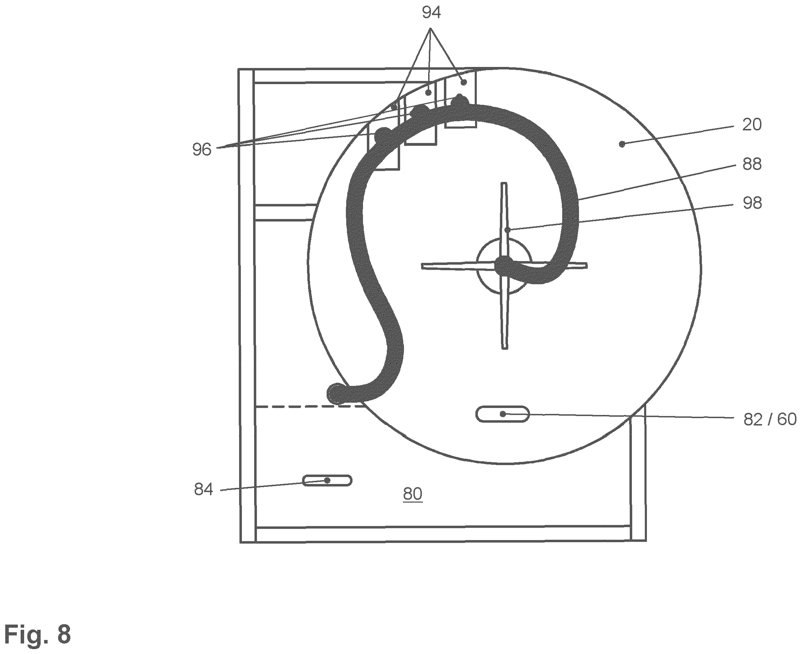

Der erste Zweig 78a des Ölverteilerkanals 78 mündet in den Deckelraum 80, wo an seinem freien Ende ein Ölleitrohr 88 angeschlossen ist. Figur 8 zeigt eine Schnittansicht gemäß Schnittlinie VIII-VIII in Figur 7 und soll nachfolgend gemeinsam mit Figur 7 diskutiert werden. Das Ölleitrohr 88 führt in einem Bogen zu einem Fixierstern 98, der mit seinen Auslegern an der Außenseite der äußeren Motorraum-Stirnwand 20 festgelegt ist. In seinem Zentrum fixiert er ein als Rohrstutzen 92 ausgebildetes Ende des Ölleitrohrs 88, welches in das offene Ende der hohlen Rotorwelle 34 hineinragt. Wie auch an ihrem getrieberaumseitigen Ende ist die hohle Rotorwelle 34 in ihrem Inneren auch hier mit einer Stufe 50 ausgestattet, über welche der Rohrstutzen 92 axial hinüberragt. Folglich wird Öl, das über den zweiten Zweig 78a des Ölverteilerkanals 78 gepumpt wird, direkt in den Innenraum der Rotorwelle 34 gepumpt, wo es zum Aufbau des dortigen Ölsumpfes beiträgt. Bezüglich des weiteren Ölflusses wird auf die obigen Erläuterungen, insbesondere im Kontext von Figur 1 verwiesen.

Bei der in den Figuren 7 und 8 dargestellten Ausführungsformen erfüllt das Ölleitrohr 88 jedoch noch eine weitere Aufgabe. Bei dieser Ausführungsform sind Stromschienen 94 zur Bestromung des Stators 30 abschnittsweise durch den Deckelraum 80 geführt. Das Ölleitrohr 88 beschreibt im Deckelraum 80 einen Bogen, der es nahe an diesen Stromschienen 94 vorbeiführt. Im Bereich der größten Annäherung weist die Seitenwand des Ölleitrohres 88 Düsenöffnungen 96 auf, aus denen Öl auf die Stromschienen gespritzt wird, um diese zu kühlen. Die Dimensionierung der Düsenöffnungen 96 erfolgt, wie der Fachmann erkennen wird, vorzugsweise so, dass bei dem von der Ölpumpe 76 vorgegebenen Öldruck im Ölleitrohr 88 eine kontinuierliche, hinreichende Spülung der Stromschienen 96 erfolgen kann, wobei jedoch noch genug Öl im Ölleitrohr 88 verbleibt, um in die hohle Rotorwelle 34 zu deren Kühlung gepumpt zu werden.

Figur 9 zeigt eine besonders bevorzugte Ausführungsform des Ölbehälters 44 in seiner Montageendlage im Getriebe 38. Von letzterem sind vorliegend insbesondere das Antriebsritzel 40 und das Ausgangsrad 42 von Bedeutung.

Wie im Kontext von Figur 1 beschreiben, ist das Ausgangsrad 42 in einen in Figur 9 nicht dargestellten Getriebeölsumpf 46 eingetaucht, sodass seine Verzahnung bei Rotation Öl aufnimmt und, wie durch die schraffierten Ölförderpfeile illustriert, in eine Einlassöffnung 98 geworfen wird. Der Ölbehälter 44 weist in seiner Seitenwand eine Mehrzahl von Abflüssen auf, auf die weiter unten noch näher eingegangen werden soll. Hier soll lediglich auf den mit einem Ölförderpfeil markierten Getriebeölsumpf-Auslass 100 hingewiesen werden, der einen Ablauf von Öl aus dem Ölbehälter 44 in eine Antriebsritzel-Wanne 102 erlaubt. Die Antriebsritzel-Wanne 102 ist unterhalb des Antriebsritzels 40 so angeordnet, dass dieses bereichsweise in sie eintaucht, sodass sein unterer Bereich von einem in der Antriebsritzel-Wanne aufgestauten Ölsumpf benetzt ist. Der Getriebeölsumpf-Auslass 100 stellt den tiefstgelegenen Ölauslass des Ölbehälters 44 dar, der dessen maximales Entleeren in den Getriebeölsumpf auf dem Weg über die zum Getriebeölsumpf 46 hin überlaufende Antriebsritzel-Wanne 102 ermöglicht. Hierdurch ist dafür gesorgt, dass auch nach langen Standzeiten das Antriebsritzel 40 wenigstens bereichsweise beölt bleibt, sodass eine verschleißmindernde Beölung sämtlicher Verzahnungen des Getriebes 38 in kürzester Zeit nach dem Neustart der Antriebsanordnung einsetzt.

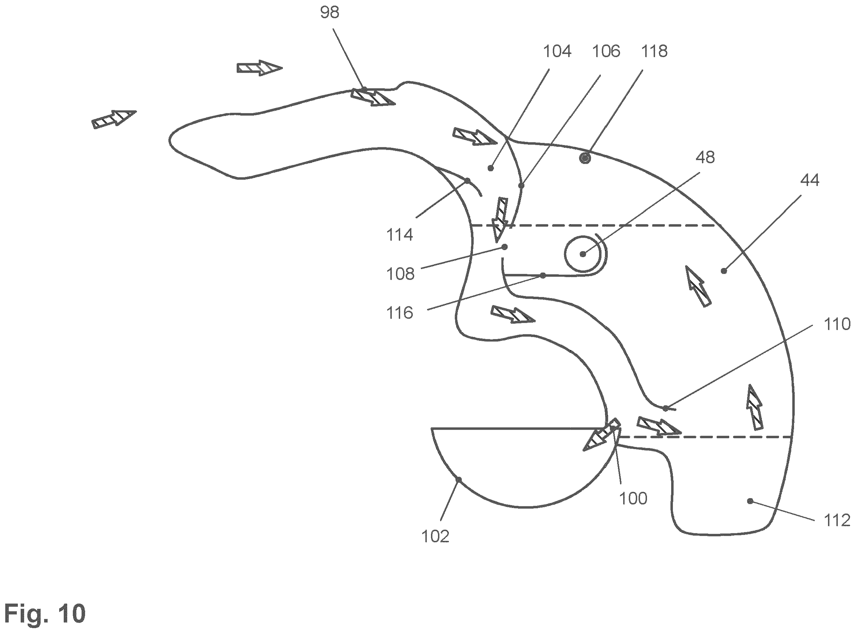

Figur 10 zeigt einen Schnitt durch den Ölbehälter 44 von Figur 9 im hier als Starkströmungsbetrieb bezeichneten Normalbetrieb. Insbesondere ist die Innenseite der Behälterwand des Ölbehälters 44 mit Blickrichtung aus dem Motorraum illustriert. Die Einlassöffnung 98 geht in einen Einlasskanal 104 über, der im Wesentlichen vertikal orientiert ist. Seine der Einlassöffnung 98 gegenüberliegende Kanalwand ist als eine konkav gekrümmte Prallwand 106 ausgebildet, gegen welche im Starkströmungsbetrieb eingeschleudertes Öl prallt und in vergleichsweise starkem Strom nach unten abfließt. Durch eine weiter unten noch näher diskutierte Durchlassöffnung 108 in der Prallwand 106 fließt lediglich ein geringer Anteil dieses Öl-Hauptstroms ab. Der hauptsächliche Anteil des Ölstroms umströmt das untere freie Ende 110 der Prallwand 106 und steigt hinter ihr wieder auf. Insbesondere bei Erreichen eines Ölpegels entsprechend der in Figur 10 oberen gestrichelten Pegellinie kann Öl durch den Rotorwellen-Auslass 48 in der Wand des Ölbehälters 44 nach außen und über eine entsprechend angeschlossene Leitung ins Innere der hohlen Rotorwelle 34 strömen, wie bereits im Kontext von Figur 1 erläutert. Zugleich kann Öl durch den Getriebeölsumpf-Auslass 100 und die Antriebsritzel-Wanne 102 in den Getriebeölsumpf 46 gelangen. Lediglich eine abflusslose Tasche 112 unterhalb des Getriebeölsumpf-Auslasses 100 beherbergt dauerhaft einen behälterinternen Ölsumpf, der sich insbesondere zum Abscheiden von Schmutz eignet. Die in Figur 10 untere gestrichelte Pegellinie illustriert den Ölpegelstand im Ölbehälter 44 nach maximaler Entleerung.

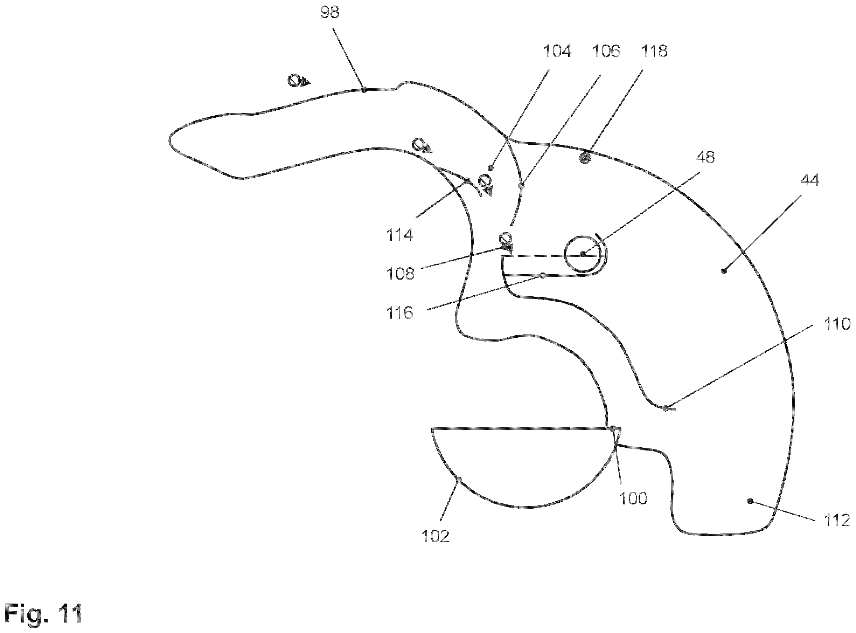

Figur 11 zeigt den gleichen Schnitt durch den Ölbehälter 44 wie Figur 10, allerdings nicht bei Starkströmungsbetrieb, sondern in einem Schwachströmungsbetrieb bei sehr langsamem Betrieb der Antriebsanordnung 10 bzw. unmittelbar nach deren Start. Entsprechend gering ist der Ölfluss, wie durch die modifizierten Ölförderpfeile in Figur 11 gegenüber Figur 10 angedeutet. Das lediglich rinnsal- oder tropfenartig geförderte Öl gelangt nicht bis zur Prallwand 106 sondern fließt an der dieser gegenüberliegenden Kanalwand ab. Unterhalb der Einlassöffnung 98 ist diese Kanalwand daher mit einem Ölleitvorsprung 114 ausgestattet, der schräg oberhalb des Durchlasses 108 endet, sodass an seiner Kante abtropfendes oder ablaufendes Öl durch besagten Durchlass 108 auf die Rückseite der Prallwand 106 fließt. Dort wird es von einem wannenartigen Zwischenboden 116 aufgefangen, der es unmittelbar zum Rotorwellen-Auslass 48 leitet. Dies bedeutet also, dass bereits bei sehr geringem, langsamem Ölfluss eine Beölung des Rotorwellen-Innenraums möglich ist und nicht erst das zuvor beschriebene Ansteigen des Ölpegels um das untere, freie Ende 110 der Prallwand 106 herum abgewartet werden muss. Der Vollständigkeit halber sei noch auf eine Entlüftungsöffnung 118 im oberen, oberhalb jedes bei Normalbetrieb denkbaren Ölpegels im Behälter 44 hingewiesen.

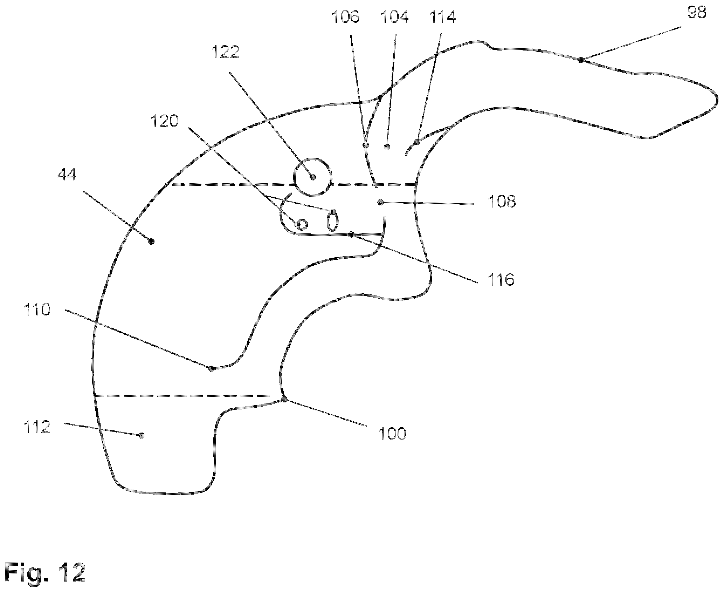

Figur 12 zeigt ebenfalls einen Schnitt durch den Ölbehälter 44, illustriert allerdings mit Blickrichtung in den Motorraum 14. Unmittelbar oberhalb des Zwischenbodens 116 sind zwei unterschiedlich dimensionierte Lager-Auslässe 120 sowie, weiter oberhalb, ein Not-Auslass 122 zum Motorraum 14 angeordnet. Durch die Lager-Auslässe 120 an der bezeichneten Stelle ist sichergestellt, dass neben der Rotorwellen-Kühlung auch die Schmierung wesentlicher Lager, die über nicht im Detail dargestellte Ölleitsysteme mit den Lager-Auslässen 120 verbunden sind, auch bei langsamem Betrieb oder unmittelbar nach einem Start der Antriebsanordnung 10 gewährleistet ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebsanordnung
- 12: Gehäuse
- 14: Motorraum
- 16: Getrieberaum
- 18: innere Stirnwand
- 20: äußere Stirnwand des Motorraums 14
- 22: äußere Stirnwand des Getrieberaums 16
- 24: Mantelwand des Motorraums 14
- 26: Mantelwand des Getrieberaums 16
- 28: elektrische Maschine
- 30: Stator
- 32: Rotor
- 34: Rotorwelle
- 36: Antriebswelle
- 38: Getriebe
- 40: Antriebsritzel
- 42: Ausgangsrad
- 44: Ölbehälter
- 46: Getriebeölsumpf
- 48: Rotorwellen-Auslass
- 50: Stufe
- 52: Radialöffnung der Rotorwelle
- 54: Wickelkopf des Stators
- 56: Kühlwassermantel
- 58: Labyrinthraum
- 60: Motorraum-Ablauf
- 62: Motorraum-Überlauf
- 64: Luftspalt
- 66: Kühlrippe
- 68: Labyrinthraum-Überlauf
- 70: Boden des Labyrinthraums
- 72: Ölleitelement
- 74: Saugraum
- 76: Ölpumpe
- 78: Ölverteilerkanal
- 78a: erster Zweig von 78
- 78b: zweiter Zweig von 78
- 80: Deckelraum
- 82: weiterer Motorraum-Überlauf
- 84: Labyrinthraum-Überlauf
- 85: Verengungsblende
- 86: Ringmagnet
- 88: Ölleitrohr
- 90: Fixierstern
- 92: Rohrstutzen
- 94: Stromschiene
- 96: Düsenöffnung
- 98: Einlassöffnung des Ölbehälters 44
- 100: Getriebeölsumpf-Auslass
- 102: Antriebsritzel-Wanne
- 104: Einlasskanal
- 106: Prallwand
- 108: Durchlass in 106
- 110: freies Ende von 106
- 112: Tasche
- 114: Ölleitvorsprung
- 116: Zwischenboden
- 118: Entlüftungsöffnung
- 120: Lager-Auslass
- 122: Motorraum-(Not-)Auslass

## Patentansprüche

1. Antriebsanordnung (10) für ein Kraftfahrzeug, umfassend
- ein Gehäuse (12) mit einem Motorraum (14) und einem an den Motorraum (14) angrenzenden, über eine innere Stirnwand (18) von diesem abgegrenzten Getrieberaum (16), jeweils axial begrenzt durch besagte innere Stirnwand (18) und eine zugeordnete äußere Stirnwand (20, 22),
- eine in dem Motorraum (14) angeordnete elektrische Maschine (28) mit einem gehäusefesten Stator (30) und einem radial innerhalb des Stators (30) angeordneten Rotor (32) mit einer die innere Stirnwand (18) durchsetzenden, im Motorraum (14) drehbar gelagerten, hohlen Rotorwelle (34),
- ein in dem Getrieberaum (16) angeordnetes Getriebe (38) mit einem auf der hier als Antriebswelle (36) wirkenden Rotorwelle (34) fixierten Antriebsritzel (40) und einem mit einem Abtrieb verbindbaren oder verbundenen Ausgangsrad (42), sowie
- ein in dem Getrieberaum angeordneter Ölbehälter (44), aus welchem durch verschiedene Ölleitöffnungen Öl in die hohle Rotorwelle (34) sowie zu Lagern und zu Verzahnungen des Getriebes (38) leitbar ist,
wobei der untere Bereich des Getrieberaums (16) als ein Getriebeölsumpf (46) ausgebildet ist, in welchen ein als Ölwurfrad wirkendes Getrieberad eingetaucht ist, um bei Rotation Öl aus dem Getriebeölsumpf (46) in eine Einlassöffnung des Ölbehälters (44) zu werfen,
**dadurch gekennzeichnet,**
**dass** in dem Ölbehälter (44) gegenüber dessen Einlassöffnung (98) eine konkav gekrümmte, als Prallwand (106) für das von dem Ölwurfrad eingeworfene Öl wirkende Zwischenwand angeordnet ist, die einen tiefer als die Einlassöffnung (98) positionierten Durchlass (108) aufweist, wobei unterhalb der Einlassöffnung (98) ein höher als der Durchlass (108) positionierter Ölleitvorsprung (114) angeordnet ist, wobei der Ölleitvorsprung so angeordnet ist, dass ein von der Einlassöffnung (98) her über ihn hinweg strömendes Öl-Rinnsal im Freistrahl zu dem Durchlass (108) in der Prallwand (106) gelenkt wird.

2. Antriebsanordnung (10) nach Anspruch 1,
**dadurch gekennzeichnet,**
**dass** der Ölbehälter (44) auf der dem Ölleitvorsprung (114) abgewandten Seite der Prallwand (106) von einem unterhalb des Durchlasses (108) angeordneten, öldicht mit der Prallwand (106) verbundenen, wannenartigen Zwischenboden (116) durchzogen ist, mittels dessen durch den Durchlass (108) dringendes Öl aufstaubar ist.

3. Antriebsanordnung (10) nach Anspruch 2,
**dadurch gekennzeichnet,**
**dass** eine Seitenwand des Ölbehälters (44) oberhalb des Zwischenbodens (116) einen mit dem Inneren der hohlen Rotorwelle (34) verbundenen Rotorwellen-Auslass (48) aufweist, durch den mittels des Zwischenbodens (116) aufgestautes Öl in die hohle Rotorwelle (34) leitbar ist.

4. Antriebsanordnung (10) nach einem der Ansprüche 2 bis 3,
**dadurch gekennzeichnet,**
**dass** eine Seitenwand des Ölbehälters (44) oberhalb des Zwischenbodens (116) einen mit einem Lager des Getriebes (38) und/oder der elektrischen Maschine (28) verbundenen Lager-Auslass (120) aufweist, durch den mittels des Zwischenbodens (116) aufgestautes Öl zu dem Lager leitbar ist.

5. Antriebsanordnung (10) nach einem der Ansprüche 3 und 4,
**dadurch gekennzeichnet,**
**dass** der Rotorwellen-Auslass (48) und der Lager-Auslass (120) auf gleichem Höhenniveau in gegenüberliegenden Seitenwänden des Ölbehälters (44) angeordnet sind.

6. Antriebsanordnung (10) nach einem der Ansprüche 2 bis 5,
**dadurch gekennzeichnet,**
**dass** das der Prallwand (106) abgewandt Ende des Zwischenbodens (116) als ein freies Ende ausgebildet ist, sodass es von Öl umströmbar ist.

7. Antriebsanordnung (10) nach einem der vorangehenden Ansprüche,
**dadurch gekennzeichnet,**
**dass** das untere Ende (110) der Prallwand (106) als ein freies Ende ausgebildet ist, sodass es von Öl umströmbar ist.

8. Antriebsanordnung (10) nach einem der vorangehenden Ansprüche,
**dadurch gekennzeichnet,**
**dass** im untersten Bereich des Ölbehälters (44) eine abflusslose Tasche (112) ausgebildet ist, in der Öl bis zum Niveau eines in einer Seitenwand des Ölbehälters (44) angeordneten, mit dem Getriebeölsumpf (46) verbundenen Getriebeölsumpf-Auslasses (100) aufstaubar ist.

9. Antriebsanordnung (10) nach Anspruch 8,
**dadurch gekennzeichnet,**
**dass** der Getriebeölsumpf-Auslass (100) in eine Wanne (102) außerhalb des Ölbehälters (44) mündet, in welche der untere Bereich des Antriebsritzels (40) von oben hineinragt.

10. Antriebsanordnung (10) nach einem der vorangehenden Ansprüche,
**dadurch gekennzeichnet,**
**dass** in einer Seitenwand des Ölbehälters (44) ein höher als der Durchlass (108) positionierter, mit dem Getrieberaum (16) verbundener Motorraum-Auslass (122) angeordnet ist.

## Claims

1. Drive assembly (10) for a motor vehicle, comprising
- a housing (12) having a motor space (14) and a transmission space (16) which is contiguous to the motor space (14), is delimited from the latter by way of an inner bulkhead (18) and is in each case axially delimited by said inner bulkhead (18) and an assigned outer bulkhead (20, 22),
- an electric machine (28) which is disposed in the motor space (14), has a stator (30) fixed to the housing, and a rotor (32) which is disposed radially within the stator (30) and has a hollow rotor shaft (34) that penetrates the inner bulkhead (18) and is rotatably mounted in the motor space (14),
- a transmission (38) which is disposed in the transmission space (16) and has a drive pinion (40) which is fixed to the rotor shaft (34) that acts as a drive shaft (36) here, and an output wheel (42) which is connectable or connected to an output, and
- an oil container (44) which is disposed in the transmission space and from which oil is able to be directed through different oil-directing openings into the hollow rotor shaft (34) and to bearings and to toothings of the transmission (38),
wherein the lower region of the transmission space (16) is designed as a transmission oil sump (46) in which is immersed a gear wheel acting as an oil hurling wheel so as to hurl oil from the transmission oil sump (46) into an inlet opening of the oil container (44) during rotation,
**characterized**
**in that** a concavely curved intermediate wall acting as an impact wall (106) for the oil hurled in by the oil hurling wheel is disposed in the oil container (44) opposite the inlet opening (98) of the latter, said intermediate wall having a passage (108) that is positioned lower down than the inlet opening (98), wherein an oil-directing protrusion (114), which is positioned higher up than the passage (108), is disposed below the inlet opening (98), wherein the oil-directing protrusion is disposed in such a way that an oil trickle flowing from the inlet opening (98) over said oil-directing protrusion is guided in the open jet to the passage (108) in the impact wall (106).

2. Drive assembly (10) according to Claim 1,
**characterized**
**in that** the oil container (44), on that side of the impact wall (106) that faces away from the oil-directing protrusion (114), is traversed by a trough-like intermediate base (116) which is disposed below the passage (108), is connected in an oil-tight manner to the impact wall (106) and by means of which oil entering through the passage (108) is able to be dammed.

3. Drive assembly (10) according to Claim 2,
**characterized**
**in that** a lateral wall of the oil container (44), above the intermediate base (116), has a rotor shaft outlet (48) which is connected to the interior of the hollow rotor shaft (34) and by way of which oil dammed by means of the intermediate base (116) is able to be directed into the hollow rotor shaft (34) .

4. Drive assembly (10) according to one of Claims 2 to 3,
**characterized**
**in that** a lateral wall of the oil container (44), above the intermediate base (116), has a bearing outlet (120) which is connected to a bearing of the transmission (38) and/or the electric machine (28) and by way of which oil dammed by means of the intermediate base (116) is able to be directed to the bearing.

5. Drive assembly (10) according to one of Claims 3 and 4,
**characterized**
**in that** the rotor shaft outlet (48) and the bearing outlet (120) are disposed at the same height level in mutually opposite lateral walls of the oil container (44).

6. Drive assembly (10) according to one of Claims 2 to 5,
**characterized**
**in that** that end of the intermediate base (116) which faces away from the impact wall (106) is designed as a free end in such a way that it is able to be surrounded by a flow of oil.

7. Drive assembly (10) according to one of the preceding claims,
**characterized**
**in that** the lower end (110) of the impact wall (106) is designed as a free end in such a way that it is able to be surrounded by a flow of oil.

8. Drive assembly (10) according to one of the preceding claims,
**characterized**
**in that** a drainless pocket (112) is formed in the lowermost region of the oil container (44), in which oil is able to be dammed up to the level of a transmission oil sump outlet (100) that is disposed in a lateral wall of the oil container (44) and is connected to the transmission oil sump (46).

9. Drive assembly (10) according to Claim 8,
**characterized**
**in that** the transmission oil sump outlet (100) opens into a trough (102) outside the oil container (44), into which the lower region of the drive pinion (40) protrudes from above.

10. Drive assembly (10) according to one of the preceding claims,
**characterized**
**in that** a motor space outlet (122) which is positioned higher up than the passage (108) and is connected to the transmission space (16) is disposed in a lateral wall of the oil container (44).

## Revendications

1. Ensemble d'entraînement (10) pour un véhicule automobile, comprenant
- un carter (12) comportant un compartiment de moteur (14) et un compartiment de transmission (16) adjacent au compartiment de moteur (14) et isolé de celui-ci par le biais d'une paroi frontale intérieure (18), délimité respectivement axialement par ladite paroi frontale intérieure (18) et une paroi frontale extérieure (20, 22) associée,
- une machine électrique (28) disposée dans le compartiment de moteur (14), comportant un stator (30) solidaire du carter et un rotor (32) disposé radialement à l'intérieur du stator (30), comportant un arbre de rotor (34) creux traversant la paroi frontale intérieure (18), monté rotatif dans le compartiment de moteur (14),
- une transmission (38) disposée dans le compartiment de transmission (16) et comportant un pignon d'entraînement (40) fixé sur l'arbre de rotor (34) agissant ici en tant qu'arbre d'entraînement (36) et une roue de sortie (42) pouvant être reliée ou reliée à une sortie, et
- un réservoir à huile (44) disposé dans le compartiment de transmission, réservoir à huile à partir duquel, à travers différentes ouvertures de guidage d'huile, de l'huile peut être guidée dans l'arbre de rotor (34) creux ainsi que jusqu'à des paliers et jusqu'à des dentures de la transmission (38),
la région inférieure du compartiment de transmission (16) étant réalisée sous la forme d'un carter d'huile de transmission (46) dans lequel une roue de transmission agissant en tant que roue de projection d'huile est immergée, afin de projeter, lors de la rotation, de l'huile à partir du carter d'huile de transmission (46) dans une ouverture d'entrée du réservoir à huile (44), **caractérisé en ce que**,
dans le réservoir à huile (44), en face de son ouverture d'entrée (98), est disposée une paroi intermédiaire de courbure concave, agissant en tant que paroi déflectrice (106) pour l'huile projetée par la roue de projection d'huile, laquelle paroi intermédiaire présente un passage (108) positionné plus bas que l'ouverture d'entrée (98), une saillie de guidage d'huile (114) positionnée plus haut que le passage (108) étant disposée en dessous de l'ouverture d'entrée (98), la saillie de guidage d'huile étant disposée de telle sorte qu'un filet d'huile s'écoulant à partir de l'ouverture d'entrée (98) au-delà de celle-ci soit dévié dans le jet libre jusqu'au passage (108) dans la paroi déflectrice (106).

2. Ensemble d'entraînement (10) selon la revendication 1,
**caractérisé en ce que**
le réservoir à huile (44), sur le côté de la paroi déflectrice (106) opposé à la saillie de guidage d'huile (114), est traversé par un fond intermédiaire (116) en forme de bac, disposé en dessous du passage (108), relié à la paroi déflectrice (106) de manière étanche à l'huile, fond intermédiaire au moyen duquel de l'huile pénétrant à travers le passage (108) peut être accumulée.

3. Ensemble d'entraînement (10) selon la revendication 2,
**caractérisé en ce**
**qu'**une paroi latérale du réservoir à huile (44) présente, au-dessus du fond intermédiaire (116), une sortie d'arbre de rotor (48) reliée à l'intérieur de l'arbre de rotor (34) creux, sortie à travers laquelle l'huile accumulée au moyen du fond intermédiaire (116) peut être guidée dans l'arbre de rotor (34) creux.

4. Ensemble d'entraînement (10) selon l'une des revendications 2 et 3,
**caractérisé en ce**
**qu'**une paroi latérale du réservoir à huile (44) présente, au-dessus du fond intermédiaire (116), une sortie de palier (120) reliée à un palier de la transmission (38) et/ou à la machine électrique (28), sortie à travers laquelle de l'huile accumulée au moyen du fond intermédiaire (116) peut être guidée jusqu'au palier.

5. Ensemble d'entraînement (10) selon l'une des revendications 3 et 4,
**caractérisé en ce que**
la sortie d'arbre de rotor (48) et la sortie de palier (120) sont disposées au même niveau de hauteur dans des parois latérales se faisant face du réservoir à huile (44) .

6. Ensemble d'entraînement (10) selon l'une des revendications 2 à 5,
**caractérisé en ce que**
l'extrémité du fond intermédiaire (116) opposée à la paroi déflectrice (106) est réalisée sous la forme d'une extrémité libre, de sorte que de l'huile puisse s'écouler autour de celle-ci.

7. Ensemble d'entraînement (10) selon l'une des revendications précédentes,
**caractérisé en ce que**
l'extrémité inférieure (110) de la paroi déflectrice (106) est réalisée sous la forme d'une extrémité libre, de sorte que de l'huile puisse s'écouler autour de celle-ci .

8. Ensemble d'entraînement (10) selon l'une des revendications précédentes,
**caractérisé en ce que**,
dans la région la plus basse du réservoir à huile (44), est réalisée une cavité (112) sans écoulement, dans laquelle de l'huile peut être accumulée jusqu'au niveau d'une sortie de carter d'huile de transmission (100) disposée dans une paroi latérale du réservoir à huile (44) et reliée au carter d'huile de transmission (46).

9. Ensemble d'entraînement (10) selon la revendication 8,
**caractérisé en ce que**
la sortie de carter d'huile de transmission (100) débouche dans un bac (102) à l'extérieur du réservoir à huile (44), bac dans lequel la région inférieure du pignon d'entraînement (40) pénètre par le haut.

10. Ensemble d'entraînement (10) selon l'une des revendications précédentes,
**caractérisé en ce**
**qu'**une sortie de compartiment de moteur (122) positionnée plus haut que le passage (108) et reliée au compartiment de transmission (16) est disposée dans une paroi latérale du réservoir à huile (44).
